# FASCICULE DE BREVET EUROPEEN

(11) **EP 0 723 270 B1**
(45) Date de publication et mention de la délivrance du brevet: **14.04.1999**
(21) Numéro de dépôt: 96400099.6
(22) Date de dépôt: 16.01.1996
(51) Int. Cl.: G21C 1/09

(54) **Dispositif de vaporisation du mélange diphasique d'un circuit de refroidissement au cours d'une dépressurisation selon une procédure**
Vorrichtung zur Verdampfung der Zweiphasenmischung eines Kühlkreislaufs bei einem planmässigen Druckabbau
Installation for the vapourization of the two-phase mixture contained in a cooling system during a scheduled depressurization

(30) Priorité: 18.01.1995 FR 9500510
(43) Date de publication de la demande: 24.07.1996
(73) Titulaire: COMMISSARIAT A L'ENERGIE ATOMIQUE, 75015 Paris (FR)
(72) Inventeur: Aujollet, Patrick, F-84120 Pertuis (FR); Clement, Patrice, F-38120 Saint Egreve (FR)
(74) Mandataire: Dubois-Chabert, Guy

(56) Documents cités:
- EP-A- 0 026 714
- EP-A- 0 578 392
- GB-A- 1 162 707

## Description

La présente invention concerne un dispositif de vaporisation du mélange diphasique d'un circuit de refroidissement lors des opérations de dépressurisation.

Plus précisément, un tel dispositif permet de maintenir, tout au long d'une opération de dépressurisation programmée, un débit de vapeur à la sortie du dispositif.

Pour illustrer l'utilisation d'un tel dispsitif, nous l'intégrons au circuit primaire de refroidissement d'un réacteur à eau sous pression (REP).

### ETAT DE LA TECHNIQUE

Actuellement, la dépressurisation programmée du circuit primaire d'un réacteur à eau pressurisée est effectuée au moyen d'un dispositif de décharge branché au sommet du pressuriseur.

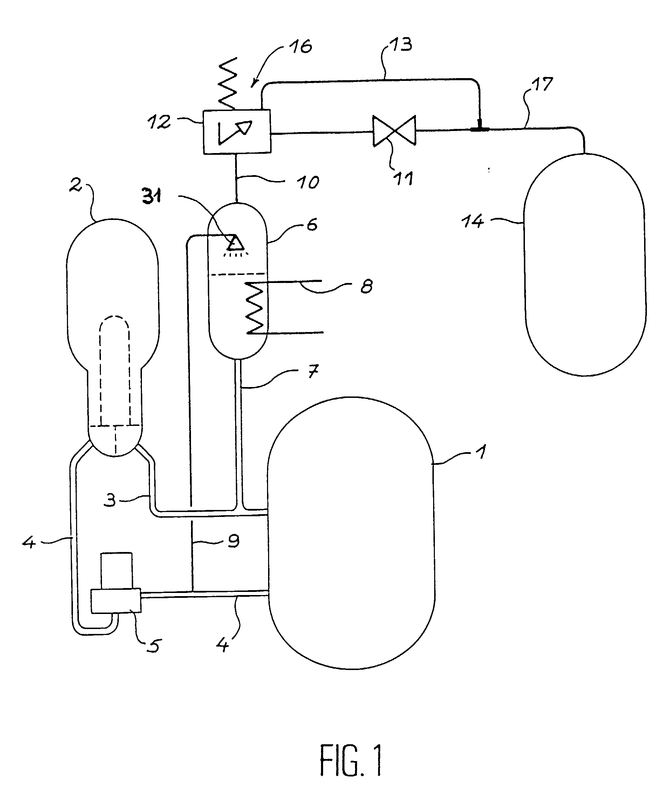

Un tel circuit primaire d'un REP, représenté sur la figure 1, comprend essentiellement :
- une cuve 1 dans laquelle se trouve le coeur nucléaire qui porte l'eau à haute température (∼320°C) et qui constitue donc la source chaude du réacteur. La circulation de cette eau chauffée dans la cuve 1 vers le générateur de vapeur 2, qui constitue la source froide, s'effectue par une canalisation 3 appelée "branche chaude". A la sortie du générateur de vapeur, l'eau partiellement refroidie est renvoyée vers la cuve 1 par une pompe 5 au moyen d'une canalisation 4 appelée "branche froide". La "branche chaude" 3 du circuit primaire est reliée par une canalisation de dérivation 7 à un pressuriseur 6, réservoir longiforme dans lequel on vaporise partiellement l'eau grâce à une résistance électrique 8 jusqu'à ce que la vapeur emprisonnée dans la partie supérieure atteigne la pression recherchée (∼155 bars). Lorsqu'on veut réduire la pression, une douche 31 alimentée en eau plus froide par un conduit 9 relié à la "branche froide" permet de condenser progressivement la vapeur.

Les opérations de dépressurisation de ce circuit primaire sont effectuées à l'aide du dispositif de décharge 16 branché sur la partie supérieure du pressuriseur et qui est constitué essentiellement d'une vanne de décharge 11 reliée au pressuriseur 6 par la canalisation 10 et au réservoir de rejet 14 par la canalisation 17 ; ainsi que d'une soupape de sécurité 12 reliée directement au réservoir de rejet 14 par la canalisation 13.

Cette soupape de sécurité 12 s'ouvre automatiquement en cas de surpression anormale du circuit primaire.

Pour effectuer une dépressurisation programmée, on commande l'ouverture de la vanne de décharge 11.

Mais tout au long d'une telle opération de dépressurisation, il est nécessaire d'assurer dans le circuit primaire un débit de fluide réfrigérant suffisant pour maintenir un refroidissement continu de la source chaude.

Or le pressuriseur à lui seul ne permet pas de remplir avec satisfaction une telle fonction. En effet, dès que le volume (limité) de vapeur du dôme du pressuriseur a été évacué vers le réservoir de rejet 11, le pressuriseur se remplit entièrement d'un mélange de liquide et de vapeur qui s'écoule vers le réservoir 14 ; il s'ensuit un rejet important de fluide primaire en phase liquide qui fera défaut pour le refroidissement du coeur du réacteur.

Le dispositif selon l'invention permet de résoudre ce problème en vaporisant l'eau primaire et en utilisant toute la chaleur latente de vaporisation de la masse de fluide relâché pour contribuer au refroidissement de la source chaude.

Ce dispositif branché à un circuit de refroidissement par liquide sous pression comprend un récipient relié à un premier point du circuit par une première tuyauterie et à un second point du circuit, plus froid que le premier, par une seconde tuyauterie, ces tuyauteries étant reliées par des tubes d'échange de chaleur situés dans une partie inférieure du récipient, une tuyauterie supplémentaire reliant l'intérieur du récipient à la seconde tuyauterie, la tuyauterie supplémentaire étant munie d'une vanne d'arrêt et d'un dispositif réducteur de débit, une canalisation de rejet de vapeur débouchant dans la partie supérieure du récipient.

Avantageusement, la seconde tuyauterie au moins est verticale et descendante du récipient au circuit, de façon qu'une circulation naturelle soit instaurée dans la première tuyauterie, les tubes d'échange de chaleur et la seconde tuyauterie ; cet effet peut être renforcé par un dispositif de refroidissement installé sur la seconde tuyauterie.

L'invention va à présent être décrite plus en détail à l'aide des figures suivantes, données à titre illustratif :
- la figure 1 déjà décrite représente un circuit primaire de réacteur à eau sous pression ;
- la figure 2 représente l'invention ;

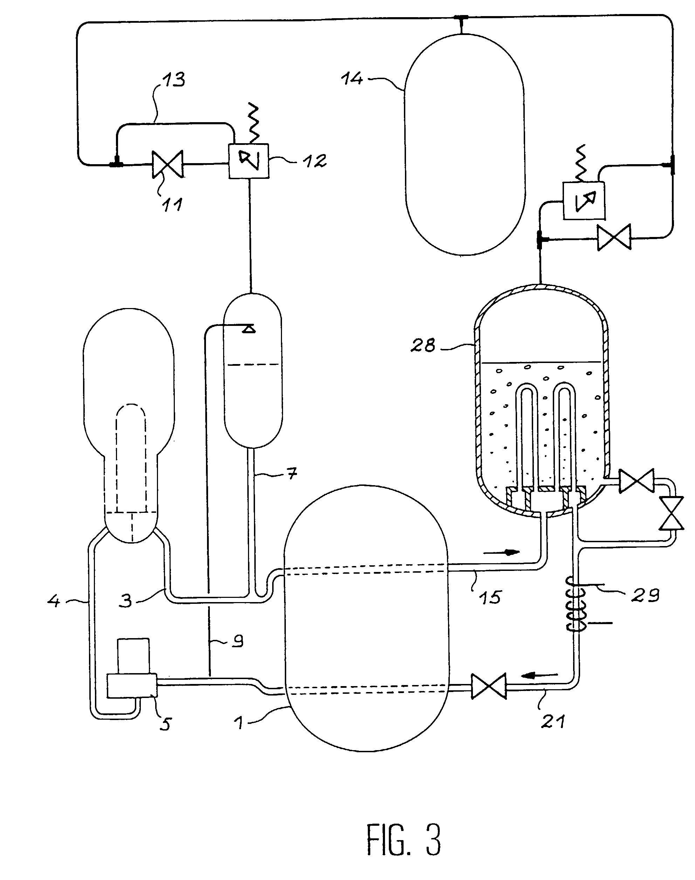

- et la figure 3 représente une implantation possible de l'invention sur le circuit de la figure 1.

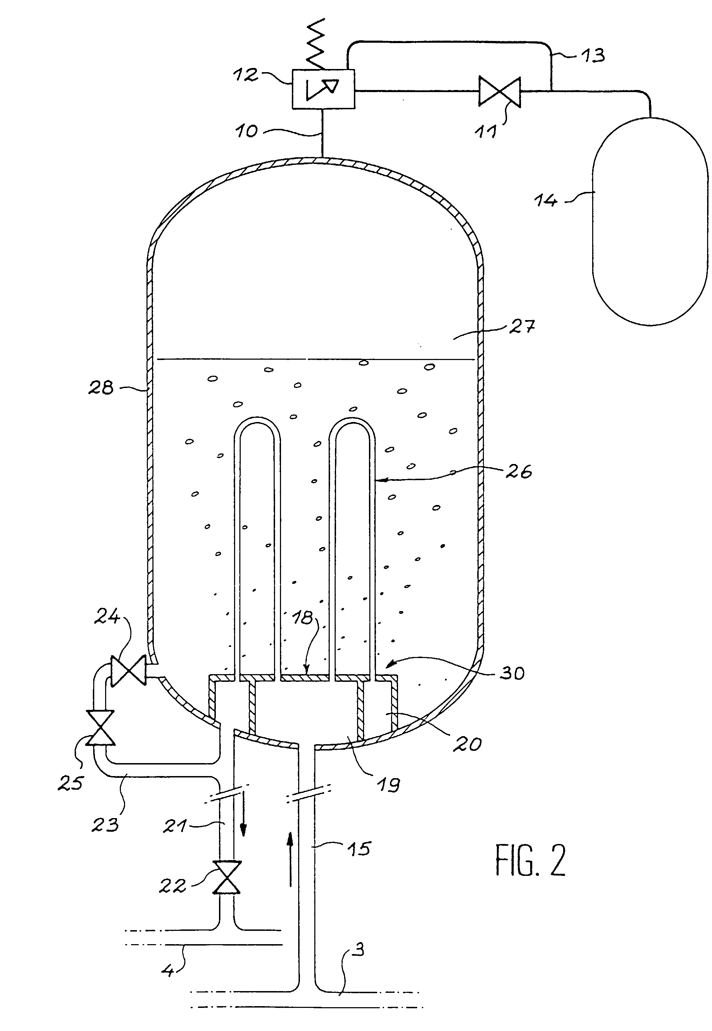

Le dispositif de vaporisation selon l'invention, représenté sur la figure 2, comprend :
- un récipient fermé 28 comportant dans sa partie inférieure deux chambres 19, 20, respectivement d'entrée et de sortie de l'eau primaire et appelées boîtes à eau. Sur la figure 2 les deux boîtes à eau sont concentriques, mais elles peuvent avoir d'autres formes comme par exemple les boîtes à eau du générateur de vapeur 2 de la figure 1 qui sont formées par le fond du récipient, la plaque tubulaire et une cloison de séparation médiane.

Ces deux boîtes à eau sont reliées entre elles par un faisceau de tubes échangeurs thermiques 26 situés à l'intérieur du récipient 28. L'alimentation en eau primaire de la boîte à eau d'entrée est réalisée au moyen d'une tuyauterie 15 reliée (de préférence) à la branche chaude 3 ; et le retour de l'eau primaire est réalisé au moyen d'une tuyauterie verticale 21 reliée (de préférence) à la branche froide 4 du circuit primaire. La circulation de l'eau primaire à travers les tubes échangeurs thermiques peut être une circulation forcée au moyen d'une pompe, par exemple, implantée sur l'une des tuyauteries 15 ou 21 ; ou une circulation par convexion naturelle favorisée par l'allongement des tubes échangeurs thermiques 26 et/ou de la tuyauterie verticale 21 dont la colonne d'eau doit être la plus lourde possible. Un refroidissement supplémentaire de cette colonne d'eau peut être réalisé à l'aide d'un échangeur thermique 29.

La partie la plus innovante est constituée par le dispositif d'alimentation en fluide du récipient 28 à partir d'un piquage sur la tuyauterie de sortie froide 21 ou directement sur la boîte à eau de sortie. Ce dispositif est constitué par une tuyauterie 23 reliant le circuit de sortie froid au récipient 28, et comportant une vanne d'arrêt 24 et essentiellement un réducteur de débit 25 (par exemple une vanne de réglage, ou un orifice calibré).

La partie supérieure du récipient 28 est équipée d'un système de décharge identique à celui du pressuriseur décrit ci-dessus.

### FONCTIONNEMENT

Avant toute opération de dépressurisation programmée, le récipient 28 est partiellement rempli d'eau primaire 30 surmontée d'un dôme de vapeur ou de gaz sous pression 27. La vanne 22 en position fermée empêche la circulation de l'eau primaire dans les tubes échangeurs 26. La vanne d'arrêt 11 du circuit de décharge, et la vanne d'arrêt 24 du dispositif d'alimentation en fluide du récipient sont fermées.

Pour effectuer l'opération de dépressurisation on procède de la façon suivante.

La vanne 11 du circuit de décharge est ouverte en même temps que la vanne d'arrêt 22. Immédiatement, la pression va baisser dans le récipient 28 puisqu'une partie du gaz ou de la vapeur est éjectée depuis le haut du récipient vers le système de décharge. Le fluide primaire chaud se met à circuler depuis la branche chaude 3 à travers l'échangeur de chaleur constitué des parties 19, 20 et 26, cédant sa chaleur à travers la paroi des tubes 26 au fluide plus froid 30 contenu dans le récipient 28. L'effet conjugué de cet échauffement et de la baisse de pression dans le récipient 28 va permettre d'atteindre les conditions de saturation dans le fluide 30 qui se mettra à bouillir, la vapeur produite va s'échapper par le système de décharge 10, tant qu'il restera du liquide au fond du récipient 28. L'alimentation en liquide du récipient 28 est assurée par l'ouverture de la vanne 24 située sur la tuyauterie 23.

Le débit d'eau qui arrive des tuyaux 26 se répartit entre l'alimentation régulée par la vanne 25 du récipient 28 et le retour vers la branche froide 4 via la tuyauterie 21. Le régulateur 25 du débit d'alimentation du récipient 28 permet de maintenir un niveau suffisant pour que les tubes de l'échangeur soient noyés sans toutefois permettre le remplissage complet du récipient 28 afin qu'il soit toujours maintenu un volume de vapeur suffisant entre le niveau d'eau dans le récipient 28 et le système de décharge 10.

Pendant la dépressurisation, tout le liquide qui circule dans la tuyauterie 15 depuis la branche chaude ne va pas aller dans la tuyauterie 23 : une partie de ce liquide refroidi dans les tubes 26 va retourner à la branche froide. La boucle de circulation naturelle se referme sur la cuve 1, cette boucle contribuant alors au refroidissement de la source chaude.

Pour stopper la dépressurisation il suffit de refermer la vanne 11 du circuit de décharge et les vannes d'arrêt 24 et 22.

## Revendications

1. Dispositif de vaporisation branché à un circuit de refroidissement, caractérisé en ce qu'il comprend un récipient (28) relié à un premier point du circuit par une première tuyauterie (15) et à un second point du circuit, plus froid que le premier, par une seconde tuyauterie (21), les tuyauteries étant reliées par des tubes d'échange de chaleur (26) situés dans une partie inférieure du récipient, une tuyauterie supplémentaire (23) reliant l'intérieur du récipient à la seconde tuyauterie (21), la tuyauterie supplémentaire (23) étant munie d'une vanne d'arrêt (24) et d'un dispositif régulateur de débit (25), une canalisation (10) du rejet de vapeur débouchant dans la partie supérieure du récipient (28).

2. Dispositif de vaporisation selon la revendication 1, caractérisé en ce que la seconde tuyauterie (21) au moins est verticale et descendante du récipient (28) au circuit plus froid (4), de façon qu'une circulation naturelle soit instaurée dans la première tuyauterie (15), les tubes d'échange de chaleur (26), et la seconde tuyauterie (21).

3. Dispositif de vaporisation selon la revendication 2, caractérisé par un dispositif de refroidissement (29) installé sur la seconde tuyauterie (21).

4. Dispositif de vaporisation selon l'une quelconque des revendications 1 à 3, caractérisé en ce que le dispositif régulateur de débit (25) est une vanne de réglage.

5. Dispositif de vaporisation selon l'une quelconque des revendications 1 à 3, caractérisé en ce que le dispositif régulateur de débit (25) est un orifice calibré.

## Patentansprüche

1. Verdampfungsvorrichtung, angeschlossen an einen Kühlkreislauf,
**dadurch gekennzeichnet**,
daß sie einen Behälter (28) umfaßt, der durch eine erste Rohrleitung (15) mit einem ersten Punkt des Kreislaufs verbunden ist und durch eine zweite Rohrleitung (21) mit einem zweiten Punkt des Kreislaufs, der kälter als der erste ist, wobei die Rohrleitungen durch Wärmetauschrohre (26) verbunden sind, die sich in einem unteren Teil des Behälters befinden, eine zusätzliche Rohrleitung (23) das Innere des Behälters mit einer zweiten Rohrleitung (21) verbindet, die zusätzliche Rohrleitung (23) mit einem Sperrventil (24) und einer Durchflußregeleinrichtung (25) ausgerüstet ist und eine Dampfablaßleitung (10) im oberen Teil des Behälters (28) mündet.

2. Verdampfungsvorrichtung nach Anspruch 1, dadurch gekennzeichnet, daß wenigstens die zweite Rohrleitung (21) vertikal ist und vom Behälter (28) bis zum kälteren Kreislauf (4) abwärts verläuft, so daß sich in der ersten Rohrleitung (15), den Wärmetauschrohren (26) und der zweiten Rohrleitung (21) eine natürliche Zirkulation einstellt.

3. Verdampfungsvorrichtung nach Anspruch 2, dadurch gekennzeichnet, daß eine Kühleinrichtung (29) an bzw. auf der zweiten Rohrleitung (21) angebracht ist.

4. Verdampfungsvorrichtung nach einem der Ansprüche 1 bis 3, dadurch gekennzeichnet, daß die Durchflußregeleinrichtung (25) ein Regelventil ist.

5. Verdampfungsvorrichtung nach einem der Ansprüche 1 bis 3, dadurch gekennzeichnet, daß die Durchflußregeleinrichtung (25) eine kalibrierte Öffnung ist.

## Claims

1. Vaporization device connected to a cooling circuit, characterized in that it includes a receptacle (28) connected to a first point of the circuit by a first pipe (15) and to a second point of the circuit, colder than the first one, by a second pipe (1), the pipes being connected by heat exchange tubes (26) situated in a lower portion of the receptacle, an additional pipe (23) connecting the inside of the receptacle to the second pipe (21), said additional pipe (23) being fitted with a stop valve (24) and a flow regulating device (25), a vapour rejection pipe (10) opening into the upper portion of the receptacle (28).

2. Vaporization device according to claim 1, characterized in that at least the second pipe (21) is vertical and descending from the receptacle (28) to the cooler circuit (4) so that a natural circulation is established in the first pipe (15), the heat exchange tubes (26) and the second pipe (21).

3. Vaporization device according to claim 2, characterized in that a cooling device (29) is installed on the second pipe (21).

4. Vaporization device according to any one of the claims 1 to 3, characterized in that the flow regulating device (25) is an adjustment valve.

5. Vaporization device according to any one of the claims 1 to 3, characterized in that the flow regulating device (25) is a calibrated orifice.
